# EUROPÄISCHE PATENTSCHRIFT

(11) **EP 1 673 249 B1**
(45) Veröffentlichungstag und Bekanntmachung des Hinweises auf die Patenterteilung: **13.06.2007**
(21) Anmeldenummer: 05729768.1
(22) Anmeldetag: 01.04.2005
(51) Int. Cl.: B60J 5/00

(54) **TÜRAUFSTELLER**
DOOR PROP
ELEMENT DE BLOCAGE DE PORTIERE

(30) Priorität: 01.04.2004 DE 202004005393 U
(43) Veröffentlichungstag der Anmeldung: 28.06.2006
(73) Patentinhaber: EISENMANN Anlagenbau GmbH & Co. KG, 71032 Böblingen (DE)
(72) Erfinder: YILMAZ, Mehmet, 74081 Heilbronn (DE)
(74) Vertreter: Schwanhäusser, Gernot
(86) Internationale Anmeldenummer: PCT/EP2005/003437
(87) Internationale Veröffentlichungsnummer: WO 2005/095135

(56) Entgegenhaltungen:
- DE-A1- 19 811 789
- DE-U1- 20 210 136
- PATENT ABSTRACTS OF JAPAN Bd. 018, Nr. 651 (C-1285), 9. Dezember 1994 (1994-12-09) -& JP 06 254474 A (HONDA MOTOR CO LTD), 13. September 1994 (1994-09-13)
- PATENT ABSTRACTS OF JAPAN Bd. 015, Nr. 345 (C-0864), 3. September 1991 (1991-09-03) -& JP 03 135475 A (HONDA MOTOR CO LTD), 10. Juni 1991 (1991-06-10)
- PATENT ABSTRACTS OF JAPAN Bd. 1999, Nr. 12, 29. Oktober 1999 (1999-10-29) -& JP 11 188305 A (TOYOTA AUTO BODY CO LTD), 13. Juli 1999 (1999-07-13)

## Beschreibung

Die Erfindung betrifft einen Türaufsteller zum Offenhalten einer Seitentür einer Kraftfahrzeugkarosserie.

Bei der Produktion von Kraftfahrzeugen wird aus einzelnen Bauteilen zunächst eine Rohkarosserie gefertigt. Diese wird anschließend in einer Oberflächenbehandlungsanlage auf unterschiedliche Weise, z.B. durch Aufbringen von Lacken und anderen Beschichtungen, behandelt. Im allgemeinen wird die Rohkarosserie dabei auch in Tauchbäder eingetaucht und darin gedreht und/oder translatorisch bewegt.

Während des Eintauchvorgangs sollen die Seitentüren der Rohkarosserie leicht geöffnet sein, damit alle Teile der Seitentüren und der Türeinfassungen gleichmäßig behandelt werden können. Eine Offenstellung der Seitentüren ist auch deswegen günstig, damit Lacke und andere Flüssigkeiten aus der Rohkarosserie leichter abfließen können.

Bewegt man eine Rohkarosserie mit geöffneten Seitentüren in einem Tauchbad, so könnten die durch die Bewegung verursachten Staudrücke dazu führen, daß sich die Seitentüren wieder schließen oder zu weit öffnen. Um dies zu verhindern, werden Türaufsteller verwendet, siehe das Dokument DE 198 11 789 A1, welche die leicht geöffneten Seitentüren in den Tauchbädern und häufig auch während der Bearbeitung in anderen Bearbeitungsstationen in einer definierten Offenstellung halten.

Bekannte Türaufsteller bestehen im wesentlichen aus einem L-förmigen Winkel mit einem kurzen Schenkel und einem langen Schenkel. Das freie Ende des kurzen Schenkels trägt ein Befestigungsstück, über das sich der Türaufsteller an der Innenseite der Seitentür anschrauben oder in sonstiger Weise lösbar befestigen läßt. An dem anderen Ende ist der kurze Schenkel über eine Blattfeder mit dem langen Schenkel verbunden, der sich im montierten Zustand in den Innenraum der Rohkarosserie hineinerstreckt.

An dem langen Schenkel ist seitlich eine Haltekerbe angeordnet, die in der Offenstellung der Seitentür in einen Falz des vertikalen Türholms eingreift. Am freien Ende des langen Schenkels ist ein Betätigungsteil angeordnet, mit dem der lange Schenkel gegen den Widerstand der Blattfeder in einer horizontalen Ebene um einige Grad aus seiner Ruheposition herausgeschwenkt werden kann. Durch Verschwenken des langen Schenkels kann die Haltekerbe in Eingriff mit dem Falz des Türholms gebracht werden, um die Seitentür in der Offenstellung zu fixieren. Durch erneutes Betätigen des Betätigungsteils kann diese Fixierung wieder gelöst werden, so daß die Seitentür geschlossen oder vollständig geöffnet werden kann.

Bei dem bekannten Türaufsteller befindet sich das Betätigungsteil relativ weit im Innenraum der Rohkarosserie.

Soll zum Öffnen und Verschließen der Seitentür ein Roboter verwendet werden, so muß dieser mit einem Roboterarm relativ weit in das Innere der Rohkarosserie hineingreifen, um das Betätigungsteil bedienen zu können. Dies ist insofern nachteilig, als sich Lackspuren und andere Partikel, die sich auf dem Roboterarm abgesetzt haben, beim Hineingreifen des Roboterarms in die Rohkarosserie von diesem lösen und auf die Türschwelle herabfallen können. Da die Türschwelle im allgemeinen bei Kraftfahrzeugen nicht verkleidet wird, können solche Verschmutzungen teure Nacharbeiten an der Rohkarosserie nach sich ziehen, um ein ästhetisch einwandfreies Erscheinungsbild zu gewährleisten.

Aufgabe der Erfindung ist es deswegen, einen Türaufsteller anzugeben, mit dem sich eine Verschmutzung der Türschwelle insbesondere bei automatischer Bedienung des Türaufstellers verhindern läßt.

Gelöst wird diese Aufgabe durch einen Türaufsteller mit:
a) einem U-förmigen Bügel, der einen ersten Schenkel, einen zweiten Schenkel und ein die beiden Schenkel verbindendes Verbindungselement aufweist, wobei die beiden Schenkel in einer Scherebene elastisch gegeneinander auslenkbar sind,
b) einem an dem freien Ende des ersten Schenkels angeordneten Befestigungsstück zum lösbaren Befestigen des Türaufstellers an einer Innenseite der Seitentür,
c) einem an dem freien Ende des zweiten Schenkels angeordnetes Betätigungsteil, mit dem der zweite Schenkel gegenüber dem ersten Schenkel ausgelenkt werden kann, und mit
d) einem an dem zweiten Schenkel zwischen dem Verbindungselement und dem Betätigungsteil angeordneten Fixiermittel zum federnden Verrasten des Türaufstellers an einem Türholm der Kraftfahrzeugkarosserie.

Durch die Verwendung eines U-förmigen Bügels anstelle einer L-förmigen Anordnung zweier Schenkel wird es möglich, das Betätigungsteil von dem Innenraum der Rohkarosserie weg in die Nähe der Seitentür zu verlegen. Insbesondere kann das Betätigungsteil in einer Ruheposition des Türaufstellers, in der die Schenkel nicht ausgelenkt sind, annähernd dem Befestigungsstück gegenüberliegen.

Wird nun das Betätigungsteil von Hand oder mit Hilfe des Roboterarms erfaßt, so können Lackspuren und andere Artikel, die sich von dem Roboterarm oder dem Betätigungsteil lösen, nicht mehr auf die Türschwelle fallen. Vielmehr setzen sich derartige Partikel auf der Innenseite der Seitentür ab, die später durch Verkleidungselemente abgedeckt und damit nicht mehr sichtbar ist.

Da das Betätigungsteil am freien Ende des zweiten Schenkels angeordnet ist, sind wegen des langen Hebelarms die zum Auslenken der Schenkel erforderlichen Kräfte gering.

Die Verwendung eines U-förmigen Bügels hat darüber hinaus den Vorteil, daß dann, wenn auf die in der Offenstellung fixierte Seitentür von innen ein Staudruck wirkt, der zweite Schenkel mit dem Fixiermittel noch stärker zum Türholm hin ausgelenkt wird. Bei den meisten in Betracht kommenden Fixiermitteln führt dies dazu, daß die Fixierung noch fester wird. Bei den herkömmlichen L-förmigen Anordnungen der Schenkel führt ein vom Inneren der Rohkarosserie auf die Seitentür wirkender Druck hingegen dazu, daß sich der Schenkel, der die in den Türfalz eingreifende Haltekerbe trägt, vom Türfalz wegbewegt, wodurch die Verrastung gelöst wird und die Seitentür weit ausschwenken kann. Eine solche weit ausschwenkende Seitentür kann z.B. an eine seitliche Wand des Tauchbads anschlagen, was zu einer Beschädigung der Seitentür und/oder der Wand führen kann.

Die besonders sichere Verrastung des Türaufstellers mit dem Türholm erlaubt es andererseits, den Bügel so auszulegen, daß zum Auslenken der Schenkel relativ kleine Kräfte genügen. Dies ist insbesondere dann vorteilhaft, wenn der Türaufsteller von Hand bedienbar sein soll.

Bei dem Betätigungsteil kann es sich um einen mit dem zweiten Schenkel verbundenen Ring handeln, dessen Durchmesser an einen Betätigungskonus eines Roboterarms angepaßt ist. Ein solcher Betätigungskonus wird gerne bei Roboterarmen eingesetzt, da sich der Konus selbst in dem Ring zentriert, so daß der Roboterarm weniger genau gegenüber der Rohkarosserie positioniert zu werden braucht.

Am günstigsten ist es im allgemeinen, wenn der Betätigungskonus von oben in den Ring eingeführt werden kann. Der Ring sollte dann zu der Scherebene, in der die Schenkel ausgelenkt werden und die im allgemeinen im eingebauten Zustand des Türaufstellers im wesentlichen waagerecht verlaufen wird, einen Winkel von weniger als 25° und vorzugsweise von weniger als 5° einschließen.

Für die Scherung der beiden Schenkel des Bügels gibt es zwei Möglichkeiten. Zum einen kann die Bügelebene, in der die beiden Schenkel in ihrer Ruheposition angeordnet sind, mit der Scherebene zusammenfallen. Anders ausgedrückt bleiben die Schenkel des U-förmigen Bügels auch beim Auslenken in der Bügelebene.

Noch günstiger ist es allerdings, wenn die beiden Schenkel in ihrer Ruheposition in einer Ebene angeordnet sind, die senkrecht zur Scherebene verläuft. In der Einbauposition an der Seitentür liegen die Schenkel dann in einer vertikalen Ebene übereinander. Dies ist deswegen günstig, weil der Befestigungspunkt für das Befestigungsstück tiefer liegen sollte als das Betätigungsteil, das an dem gegenüberliegenden Schenkel befestigt ist und von außen gut zugänglich sein muß.

Die Auslenkbarkeit der beiden Schenkel kann dadurch gewährleistet sein, daß ein oder mehrere Teile des Bügels, d.h. die beiden Schenkel und das Verbindungsstück, elastische Eigenschaften aufweisen. Am leichtesten läßt sich eine Auslenkbarkeit der Schenkel erzielen, wenn diese starr sind und nur das Verbindungsstück elastisch verbiegbar ist.

Die beiden Schenkel und das Verbindungsstück können jedoch auch einstückig aus einem elastischen Material ausgebildet sein. Die Auslenkbarkeit der Schenkel ist dann durch den Querschnitt des Materials sowie dessen elastische Eigenschaften bestimmt.

Das Fixiermittel, mit dem der Türaufsteller an dem Türholm der Kraftfahrzeugkarosserie verrasten kann, umfaßt im einfachsten Falle eine Ausnehmung, in welcher ein hervorstehendes Teil des Türholms, zum Beispiel ein Falz, eingreifen kann. Die Ausnehmung kann so ausgebildet sein, daß sie in der Art einer Haltekerbe den Falz eng umschließt, so daß der Türaufsteller mit kleinem Spiel an dem Türfalz festgelegt werden kann.

Vorzugsweise ist an einer Innenfläche der Ausnehmung mindestens ein Vorsprung derart ausgebildet, daß der Falz oder ein ähnliches Teil des Türholms den Vorsprung nur an einem Punkt oder entlang einer Linie berühren kann. Durch eine solche punkt- der linienartige Berührung zwischen dem Türaufsteller und dem Türholm wird erreicht, daß sich an dem Türaufsteller nur sehr geringe Mengen an Lacken oder sonstigen Beschichtungen ablagern können. Dementsprechend gering ist das Risiko, daß sich solche Ablagerungen wieder von dem Türaufsteller lösen und beim Herabfallen zu Verunreinigungen anderer Teile der Rohkarosserie führen.

Im allgemeinen ist es zweckmäßig, wenn der Türaufsteller eine Arretierung der Seitentür in einer Schließstellung oder Beinahe-Schließstellung ermöglicht. Zu diesem Zweck kann an dem zweiten Schenkel zwischen dem Fixiermittel und dem Betätigungsteil ein zusammen mit dem zweiten Schenkel auslenkbares festes Gegenstück angeordnet sein, das mit einem Arretierelement, das an dem ersten Schenkel angeordnet ist und sich in der Scherebene von dem ersten Schenkel nach außen erstreckt, derart zusammenwirkt, daß der Türholm oder ein Teil davon in einer Schließstellung der Seitentür zwischen dem Arretierelement und dem Gegenstück verklemmt wird.

Weitere Merkmale und Vorteile der Erfindung ergeben sich aus der nachfolgenden Beschreibung eines Ausführungsbeispiels anhand der Zeichnung. Darin zeigen:
- Figur 1: eine perspektivische Ansicht eines erfindungsgemäßen Türaufstellers gemäß einem ersten Ausführungsbeispiel der Erfindung im montierten Zustand;
- Figur 2: eine Seitenansicht eines erfindungsgemäßen Türaufstellers gemäß einem zweiten Ausführungsbeispiel der Erfindung;
- Figur 3: eine Draufsicht auf den Türaufsteller aus Figur 2;
- Figur 4: eine perspektivische Ansicht von unten auf den Türaufsteller aus Figur 2;
- Figur 5: eine Seitenansicht eines erfindungsgemäßen Türaufstellers gemäß einem dritten Ausführungsbeispiel der Erfindung;
- Figur 6: eine Draufsicht auf den Türaufsteller aus Figur 5.

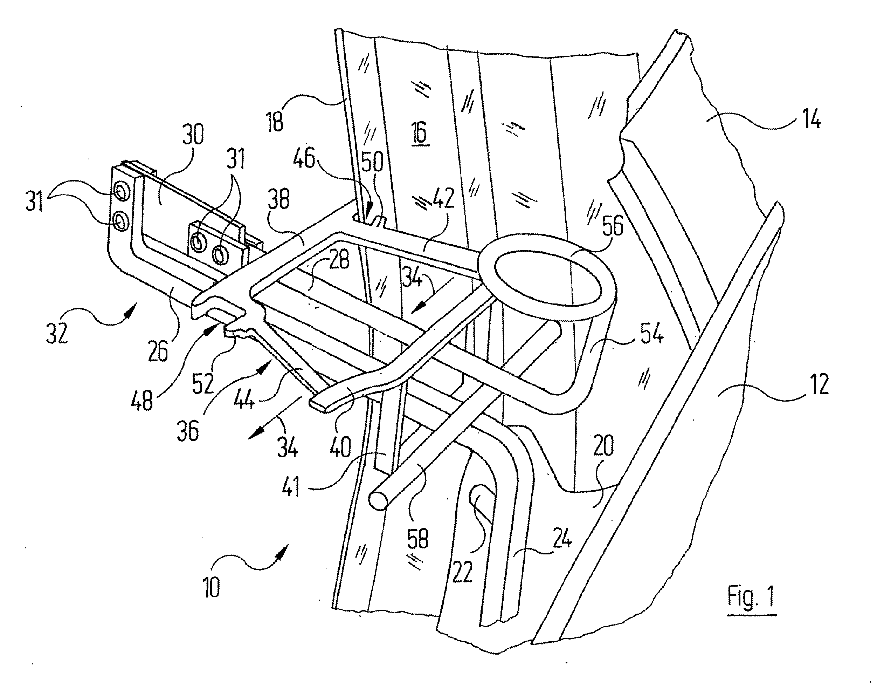

Die Figur 1 zeigt in einer perspektivischen Ansicht einen insgesamt mit 10 bezeichneten Türaufsteller sowie Teile einer Rohkarosserie eines Personenkraftwagens. Bei diesen Teilen handelt es sich im einzelnen um eine vordere linke Seitentür 12, die leicht geöffnet ist, eine linke hintere Seitentür 14 sowie einen annähernd vertikal verlaufenden Türholm 16 mit einem nach vorne weisenden Falz 18.

An der vorderen linken Seitentür 12 ist eine Innenlasche 20 ausgebildet, an der bei der Endmontage des Personenkraftwagens ein Türschloß befestigt wird. Zu diesem Zweck weist die Innenlasche 20 eine Bohrung auf, die vor der Endmontage jedoch zur lösbaren Befestigung des Türaufstellers 10 verwendet wird. Die Einzelheiten der Befestigung hängen von den konstruktiven Details der Rohkarosserie ab und sind deswegen in der Figur 1 nicht näher dargestellt. Bei dem Türaufsteller 10 ist angenommen, daß ein Befestigungsbolzen 22 des Türaufstellers 10 mit der Innenlasche 20 verschraubt ist.

Der Befestigungsbolzen 22 ist an einen abgewinkelten Abschnitt 24 eines ersten Schenkels 26 angeschweißt, der zusammen mit einem zweiten Schenkel 28 und einer die beiden Schenkel 26, 28 verbindenden Blattfeder 30 einen U-förmigen Bügel 32 bildet. In der in der Figur 1 gezeigten Montageposition des Türaufstellers 10 sind die beiden Schenkel 26, 28 im wesentlichen vertikal übereinander angeordnet, so daß eine durch den Bügel 32 festgelegte Bügelebene ebenfalls vertikal verläuft. Die über Nieten 31 mit den Schenkeln 26, 28 verbundene Blattfeder ermöglicht eine Auslenkung des zweiten Schenkels 28 in einer Scherebene, die im Montagezustand im wesentlichen horizontal und somit senkrecht zur Bügelebene verläuft. Die Auslenkbarkeit des zweiten Schenkels 28 relativ zu dem ersten Schenkel 26 ist in der Figur 1 durch Pfeile 34 angedeutet.

An dem zweiten Schenkel 28 ist ein Fixierrahmen 36 angeschweißt, der sich in einer zur Scherebene parallelen Ebene erstreckt und durch eine hintere Querstrebe 38, eine vordere Querstrebe 40, eine linke Längsstrebe 42 sowie eine rechte Längsstrebe 44 gebildet wird. Der Fixierrahmen 36 ist einstückig durch Laserschweißen aus einem Stahlblech gefertigt und - wie der gesamte Türaufsteller 10 - spiegelsymmetrisch zur Bügelebene geformt. Durch diese spiegelsymmetrische Ausbildung kann der Türaufsteller 10 nicht nur zum Aufstellen der linken vorderen Seitentür 12, sondern auch zum Aufstellen der rechten vorderen Seitentür verwendet werden.

Unter der vorderen Querstrebe 40 ist ein Schwenkbegrenzungsbügel 41 angeschweißt, der den ersten Schenkel 26 umschließt und auf diese Weise die Auslenkung des zweiten Schenkels 28 gegenüber dem ersten Schenkel 26 begrenzt.

An dem Fixierrahmen 36 sind seitlich eine linke und eine rechte Rastkerbe 46 bzw. 48 ausgebildet, deren Form an die Geometrie des Falzes 18 des Türholms 16 angepaßt ist. Bei dem dargestellten Ausführungsbeispiel werden die Rastkerben 46, 48 durch die hintere Querstrebe 38 einerseits und Vorsprünge 50, 52 andererseits gebildet, die beabstandet von der hinteren Querstrebe 38 an den Längsstreben 42 bzw. 44 ausgebildet sind.

An einem nach oben abgewinkelten Abschnitt 54 des zweiten Schenkels 28 ist ein Betätigungsring 56 angeschweißt, der sich in einer parallel zu der Scherebene verlaufenden Ringebene erstreckt. An der Oberseite des ersten Schenkels 26 ist ein Arretierstab 58 angeschweißt, der etwa die Länge der vorderen Querstrebe 40 hat, sich jedoch etwas näher an dem Betätigungsring 56 befindet.

Es versteht sich, daß die vorstehend erläuterten Teile des Türaufstellers nicht durch Schweißen, sondern auch auf andere Weise, z.B. durch Schrauben oder Vernieten, miteinander verbunden werden können.

Der Türaufsteller 10 funktioniert wie folgt:

Nach der Montage der Rohkarosserie wird der Türaufsteller 10 mit Hilfe des Befestigungsbolzens 22 mit der vorderen linken Seitentüre 12 verschraubt. Der erste, in der Montagestellung nach unten weisende Schenkel 26 ist auf diese Weise starr mit der Seitentür 12 verbunden. Um die Seitentür 12 für nachfolgende Behandlungen in einer Oberflächenbehandlungsanlage in einer definierten Offenstellung zu halten, wird der Betätigungsring 56 erfaßt und von dem Türholm 16 weggedrückt. Dadurch wird der zweite Schenkel 28 über die Blattfeder 30 gegenüber dem ersten Schenkel 26 in Richtung der Pfeile 34 ausgelenkt. Die Seitentür 12 wird nun so weit geöffnet, daß die linke Rastkerbe 46 dem Falz 18 gegenübersteht. Der Betätigungsring 56 wird nun wieder losgelassen, wodurch der zweite Schenkel 28 mit dem daran befestigten Fixierrahmen 36 wieder in die ursprüngliche Ruheposition zurückfedert.

Dabei verrastet die linke Rastkerbe 46 mit dem Falz 18. Die Seitentür 12 ist nun über den Türaufsteller 10 gegenüber dem Falz 18 des Türholms 16 in einer definierten Offenstellung festgelegt.

Um die Seitentür 12 wieder in die Schließstellung zu überführen, wird der Betätigungsring 56 erneut in Richtung der Pfeile 34 ausgelenkt, wodurch sich die linke Rastkerbe 46 wieder von dem Falz 18 entfernt. Die Seitentür 12 kann nun entweder weit geöffnet werden, um beispielsweise Arbeiten an der Innenseite der Seitentür 12 vornehmen zu können, oder aber sie wird in eine vollständige oder Beinahe-Schließstellung überführt.

Um die Seitentür 12 in einer (Beinahe-)Schließstellung zu fixieren, wird der zweite Schenkel 28 über den Betätigungsring 56 ausgelenkt und die Seitentür 12 so weit geschlossen, daß der Falz 18 zwischen der Vorderkante der vorderen Querstrebe 40 einerseits und dem Arretierstab 58 verklemmen kann, wenn der zweite Schenkel 28 wieder zurückfedert. Auf diese Weise ist die Seitentür 12 wieder - nun jedoch in einer (Beinahe-)Schließstellung - gegenüber dem Falz 18 festgelegt und kann nur durch erneute Auslenkung des Betätigungsrings 56 geöffnet werden.

Der Betätigungsring 56 ist nicht nur für eine Handbetätigung geeignet, sondern erlaubt auch eine Betätigung durch einen Roboterarm. Als Handhabungswerkzeug weist der Roboterarm vorzugsweise einen Konus auf, der in den Betätigungsring 56 eingeführt werden kann. Der Konus zentriert sich dabei selbsttätig in dem Betätigungsring 56, so daß der Roboterarm den Türaufsteller 10 selbst dann betätigen kann, wenn der Roboterarm gegenüber der Rohkarosserie nicht exakt positioniert ist.

Die U-förmige Ausbildung des Bügels 32 führt dazu, daß der Betätigungsring 56 zumindest annähernd über dem Befestigungsbolzen 22 angeordnet ist, der sich seinerseits im Montagezustand über der Innenseite der Seitentür 12 befindet. Lackspuren oder andere Partikel, die sich bei einer Betätigung des Betätigungsrings 56 von dem Betätigungsring 56 und/oder einem Roboterarm lösen, fallen somit auf die Innenseite der Seitentür 12. Da die Innenseite der Seitentür 12 später in der Regel verkleidet wird, stören solche Verunreinigungen nicht. Eine Verschmutzung der Türschwelle, die im allgemeinen nicht verkleidet wird, ist somit zuverlässig ausgeschlossen.

Wird die Seitentür 12 in der Offenstellung nach außen gezogen, z.B. infolge eines Staudrucks in einem Tauchbad, so führen die über den Bügel 32 auf die linke Rastkerbe 46 wirkenden Kräfte dazu, daß der zweite Schenkel 28 zum Türholm 16 hin geringfügig ausgelenkt wird. Auf diese Weise verkeilt sich die Rastkerbe 46 noch stärker mit dem Falz 18, so daß ein unbeabsichtigtes Öffnen der Seitentür 12 zuverlässig vermieden wird.

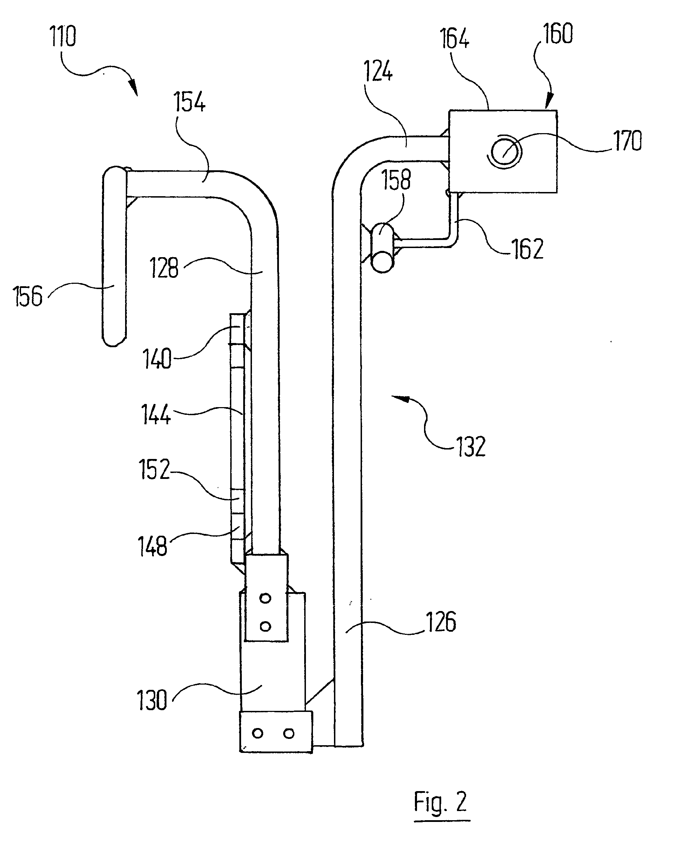

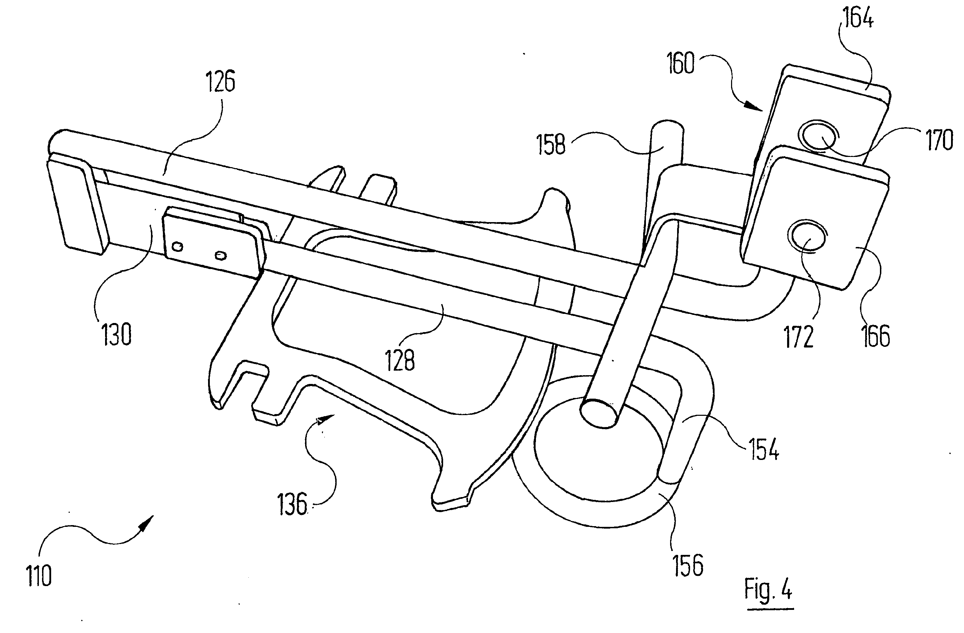

Die Figuren 2 bis 4 zeigen ein anderes Ausführungsbeispiel für einen Türaufsteller in einer Seitenansicht, einer Draufsicht sowie einer perspektivischen Ansicht von schräg unten. Gleiche oder einander entsprechende Teile sind dabei mit um 100 erhöhten Bezugsziffern bezeichnet und werden nicht nochmals erläutert.

Der insgesamt mit 110 bezeichnete Türaufsteller unterscheidet sich von dem Türaufsteller 10 dadurch, daß an dem abgewinkelten Abschnitt 124 des ersten Schenkels 126 anstelle eines Befestigungsbolzens 22 ein Befestigungsbügel 160 angeschweißt ist, der sich über ein Stabilisierungsblech 162 an dem Arretierstab 158 abstützt. Zwei parallele Schenkel 164, 166 des Befestigungsbügels 160 sind mit koaxialen Bohrungen 170 bzw. 172 versehen, die zur Aufnahme einer Befestigungsschraube dienen. Der Befestigungsbügel 160 ist dabei so dimensioniert, daß zwischen den Schenkeln 164, 166 ein mit einer Durchgangsbohrung versehener Vorsprung aufgenommen werden kann, der an der Innenseite der Seitentür 12 ausgebildet ist.

Der in den Figuren 2 bis 4 gezeigte Türaufsteller 110 enthält außerdem keinen Schwenkbegrenzungsbügel 41.

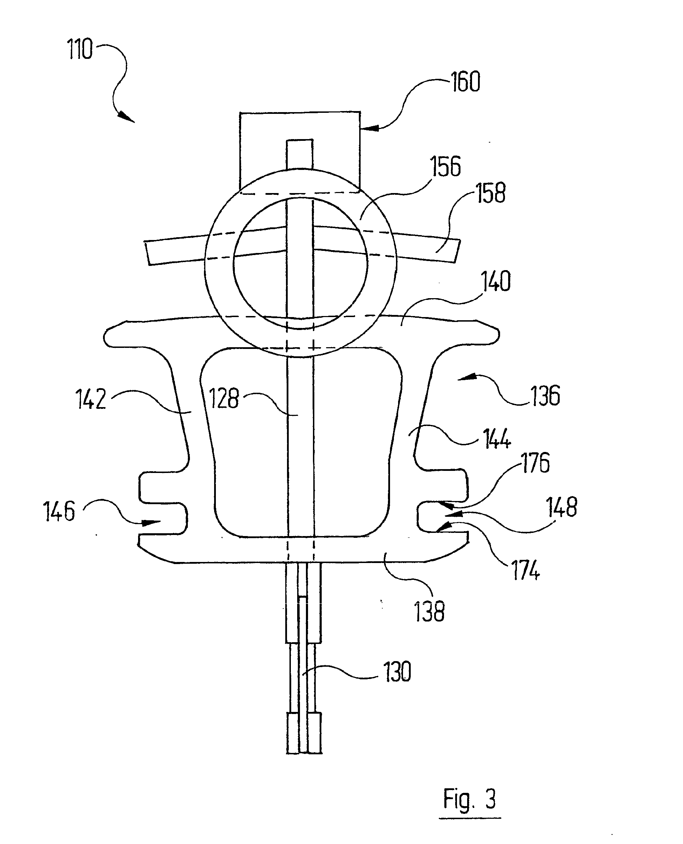

Damit die Rastkerben 146, 148 möglichst punktförmig an dem Falz 18 anliegen, können an der Innenseite der Rastkerben 146, 148 kegelstumpfförmige Vorsprünge 174, 176 ausgebildet sein, wie dies beispielhaft in der Figur 3 für die rechte Rastkerbe 148 dargestellt ist. Anstelle kegelstumpfförmiger Vorsprünge 174, 176 können auch sich senkrecht zur Papierebene der Figur 3 erstreckende Rippen mit z.B. dreieckigem Querschnitt an den Innenflächen der Rastkerben 146, 148 vorgesehen sein, die sich leichter fertigen lassen als kegelstumpfförmige Vorsprünge 174, 176. Der Falz 18 liegt dann nur entlang der nach innen vorstehenden Kanten der Rippen an dem Fixierrahmen 136 an.

Ein nur punkt- oder linienförmiger Kontakt zwischen dem Fixierrahmen 136 und dem Falz 18 hat den Vorteil, daß der Türaufsteller 110 weniger Material von der Oberfläche des Falzes 18 abträgt. Dies ist selbst dann günstig, wenn die Oberfläche des Falzes 18 später nicht mehr sichtbar sein sollte. Es wird nämlich verhindert, daß unnötig Material an dem Türaufsteller 110 haften bleibt, welches die Rastkerben 146, 148 zusetzt oder andere Teile der Rohkarosserie verschmutzt, wenn es sich wieder von den Rastkerben 146, 148 löst.

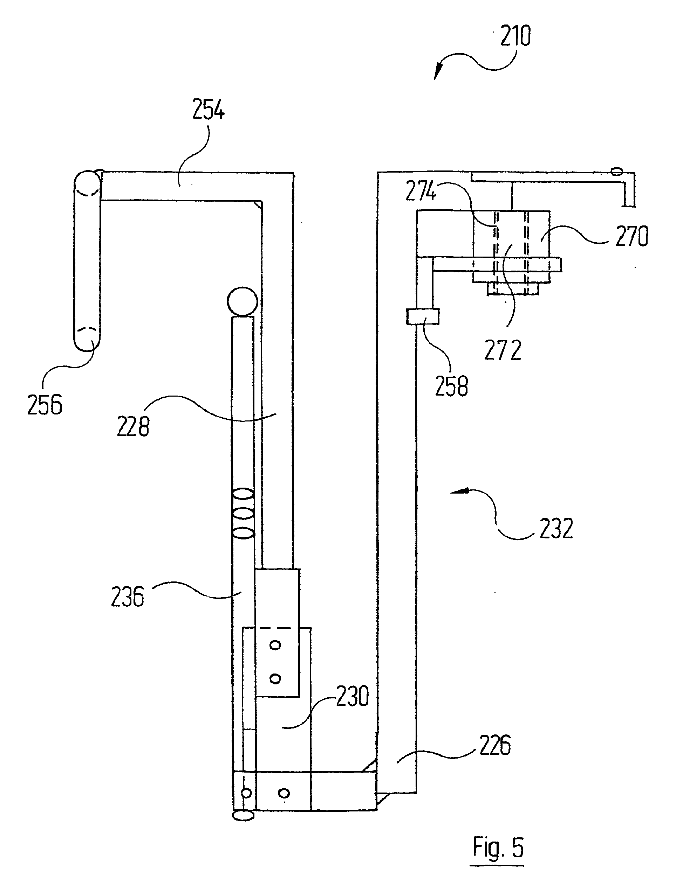

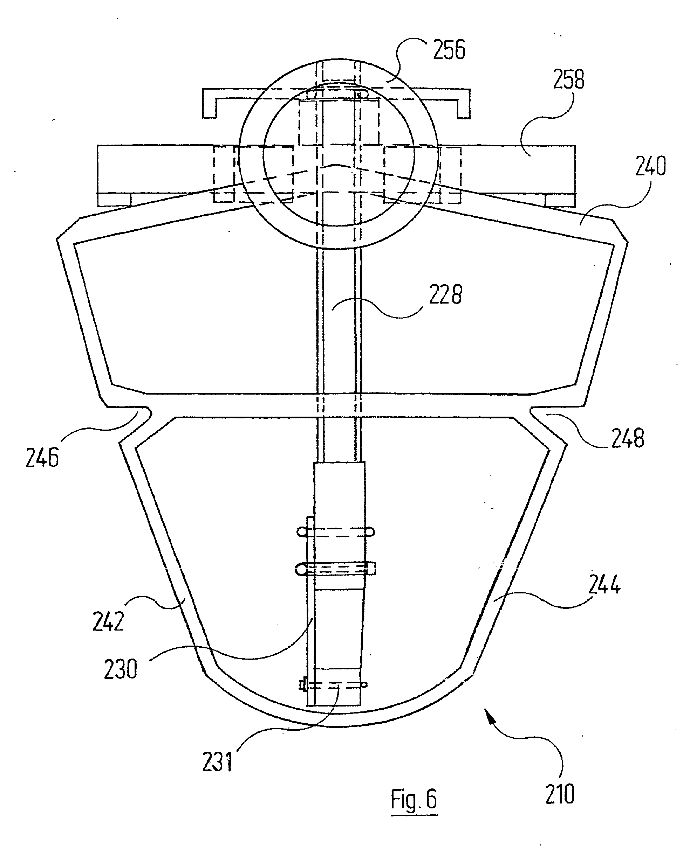

Die Figuren 5 und 6 zeigen ein drittes Ausführungsbeispiel eines Türaufstellers in einer den Figuren 2 und 3 entsprechenden Seitenansicht bzw. Draufsicht. Die Darstellungen der Figuren 5 und 6 sind nicht maßstabsgetreu und enthalten einige Zeichenfehler. Teile, die dem in der Figur 1 gezeigten Türaufsteller 10 entsprechen, sind mit um 200 erhöhten Bezugsziffern bezeichnet und werden nicht nochmals im einzelnen erläutert.

Zur Befestigung des Türaufstellers 210 an der Seitentüre 12 ist an dem ersten Schenkel 226 eine Hülse 270 mit einer Bohrung 272 vorgesehen, die ein Innengewinde 274 hat. Der Türaufsteller 210 kann somit ohne Verwendung einer Schraubenmutter an der Innenseite der Seitentür 12 angeschraubt werden.

Aus den vorstehenden Ausführungsbeispielen wird deutlich, daß die Befestigungsmittel, mit denen der Türaufsteller an der Innenseite der Seitentür 12 befestigt wird, an deren jeweilige konstruktive Gegebenheiten angepaßt werden muß. Die geometrischen Verhältnisse zwischen dem Türholm 16 einerseits und der Befestigungsmöglichkeit für den Türaufsteller 10 an der Seitentür 12 andererseits bestimmen die Form und Lage der Rastkerben. Ein und derselbe Türaufsteller kann deswegen im allgemeinen nicht sowohl für die vorderen als auch für die hinteren Seitentüren verwendet werden. Auch eine Verwendung für eine andere Rohkarosserie ist im allgemeinen nicht möglich, ohne zumindest den Fixierrahmen auszutauschen oder die Befestigungsmittel zu modifizieren.

## Patentansprüche

1. Türaufsteller zum Offenhalten einer Seitentür (12) einer Kraftfahrzeugkarosserie, insbesondere während einer Oberflächenbehandlung der Kraftfahrzeugkarosserie, mit:
a) einem U-förmigen Bügel (32; 132; 232), der einen ersten Schenkel (26; 126; 226), einen zweiten Schenkel (28; 128; 228) und ein die beiden Schenkel verbindendes Verbindungselement (30; 130; 230) aufweist, wobei die beiden Schenkel (26, 28; 126, 128; 226, 228) in einer Scherebene elastisch gegeneinander auslenkbar sind,
b) einem an dem freien Ende des ersten Schenkels (26; 126; 226) angeordneten Befestigungsstück (22; 160; 270) zum lösbaren Befestigen des Türaufstellers (10; 110; 210) an einer Innenseite (20) der Seitentür (12),
c) einem an dem freien Ende des zweiten Schenkels (28; 128; 228) angeordnetes Betätigungsteil (56; 156; 256), mit dem der zweite Schenkel (28; 128; 228) gegenüber dem ersten Schenkel (26; 126; 226) ausgelenkt werden kann, und mit
d) einem an dem zweiten Schenkel (28; 128; 228) zwischen dem Verbindungselement (30; 130; 230) und dem Betätigungsteil (56; 156; 256) angeordneten Fixiermittel (46, 48; 146, 148; 246, 248) zum federnden Verrasten des Türaufstellers an einem Türholm (16) der Kraftfahrzeugkarosserie.

2. Türaufsteller nach Anspruch 1, bei dem das Betätigungsteil (56; 156; 256) in einer Ruheposition zumindest annähernd dem Befestigungsstück (22; 160; 270) gegenüberliegt.

3. Türaufsteller nach Anspruch 1 oder 2, bei dem das Betätigungsteil ein Ring (56; 156; 256) ist.

4. Türaufsteller nach Anspruch 3, bei dem der Ring (56; 156; 256) in einer Ringebene angeordnet ist, die zur Scherebene einen Winkel von weniger als 25° einschließt.

5. Türaufsteller nach Anspruch 4, bei dem die Ringebene zur Scherebene Winkel von weniger als 5° einschließt.

6. Türaufsteller nach einem der vorhergehenden Ansprüche, bei dem die beiden Schenkel (26, 28; 126, 128; 226, 228) in ihrer Ruheposition in einer Ebene angeordnet sind, die senkrecht zur Scherebene verläuft.

7. Türaufsteller nach einem der vorhergehenden Ansprüche, bei dem in dem Bügel (32; 132; 232) nur das Verbindungselement (30; 130; 230) elastisch verbiegbar ist.

8. Türaufsteller nach einem der Ansprüche 1 bis 6, bei dem die beiden Schenkel (26, 28; 126, 128; 226, 228) und das Verbindungselement (30; 130; 230) einstückig aus einem elastischen Material ausgebildet sind.

9. Türaufsteller nach einem der vorhergehenden Ansprüche, bei dem das Fixiermittel eine Ausnehmung (46, 48; 146, 148; 246, 248) umfaßt, in welche ein Teil (18) des Türholms (16) eingreifen kann.

10. Türaufsteller nach Anspruch 9, bei dem an einer Innenfläche der Ausnehmung mindestens ein Vorsprung (174, 176) derart ausgebildet ist, daß das Teil (18) des Türholms (16) den mindestens einen Vorsprung (174, 176) nur an einem Punkt oder entlang einer Linie berühren kann.

11. Türaufsteller nach einem der vorhergehenden Ansprüche, bei dem an dem zweiten Schenkel (28; 128; 228) zwischen dem Fixiermittel (46, 48; 146, 148; 246, 248) und dem Betätigungsteil (56; 156; 256) ein zusammen mit dem zweiten Schenkel (28; 128; 228) auslenkbares festes Gegenstück (40; 140; 240) angeordnet ist, das mit einem Arretierelement (58; 158; 258), das an dem ersten Schenkel (26; 126; 226) angeordnet ist und sich in der Scherebene von dem ersten Schenkel (26; 126; 226) nach außen erstreckt, derart zusammenwirkt, daß der Türholm (18) in einer Schließstellung der Seitentür (12) zwischen dem Arretierelement (58; 158; 258) und dem Gegenstück (40; 140; 240) verklemmt wird.

## Claims

1. Door positioner for holding open a side door (12) of a vehicle body, in particular during a surface treatment of the vehicle body, with:
a) a U-shaped bracket (32; 132; 232), which has a first limb (26; 126; 226), a second limb (28; 128; 228) and a connecting element (30; 130; 230) connecting the two limbs, the two limbs (26, 28; 126, 128; 226, 228) being deflectable elastically against one another in a shear plane,
b) a fastening piece (22; 160; 270) arranged at the free end of the first limb (26; 126; 226) for the detachable fastening of the door positioner (10; 110; 210) to an inner surface (20) of the side door (12),
c) an actuating part (56; 156; 256) arranged at the free end of the second limb (28; 128; 228), with which actuating part the second limb (28; 128; 228) can be deflected compared with the first limb (26; 126; 226), and with
d) a fixing means (46, 48; 146, 148; 246, 248) arranged on the second limb (28; 128; 228) between the connecting element (30; 130; 230) and the actuating part (56; 156; 256) for spring locking of the door positioner on a door spar (16) of the vehicle body.

2. Door positioner according to claim 1, in which the actuating part (56; 156; 256) lies in a resting position at least approximately opposite the fastening piece (22; 160; 270).

3. Door positioner according to claim 1 or 2, in which the actuating part is a ring (56; 156; 256).

4. Door positioner according to claim 3, in which the ring (56; 156; 256) is arranged in a ring plane, which encloses an angle of less than 25° relative to the shear plane.

5. Door positioner according to claim 4, in which the ring plane encloses angles of less than 5° relative to the shear plane.

6. Door positioner according to one of the preceding claims, in which the two limbs (26, 28; 126, 128; 226, 228) are arranged in their resting position in a plane that runs perpendicular to the shear plane.

7. Door positioner according to one of the preceding claims, in which in the bracket (32; 132; 232) only the connecting element (30; 130; 230) is elastically bendable.

8. Door positioner according to one of claims 1 to 6, in which the two limbs (26, 2.8; 126, 128; 226, 228) and the connecting element (30; 130; 230) are formed in one piece from an elastic material.

9. Door positioner according to one of the preceding claims, in which the fixing means comprises a recess (46, 48; 146, 148; 246, 248), in which a part (18) of the door spar (16) can engage.

10. Door positioner according to claim 9, in which on an inner surface of the recess at least one projection (174, 176) is formed such that the part (18) of the door spar (16) can touch the at least one projection (174, 176) only at one point or along one line.

11. Door positioner according to one of the preceding claims, in which arranged on the second limb (28; 128; 228) between the fixing means (46, 48; 146, 148; 246, 248) and the actuating part (56; 156; 256) is a fixed counterpart (40; 140; 240) deflectable together with the second limb (28; 128; 228), which element interacts with a locking element (58; 158; 258), which is arranged on the first limb (26; 126; 226) and extends outwards in the shear plane from the first limb (26; 126; 226), in such a way that the door spar (18) is clamped in a closed position of the side door (12) between the locking element (58; 158; 258) and the counterpart (40; 140; 240).

## Revendications

1. Positionneur de portière pour maintenir ouverte une portière latérale (12) d'une carrosserie de véhicule automobile, notamment pendant un traitement de surface de la carrosserie de véhicule automobile, avec
a) un support en U (32 ; 132 ; 232) qui présente une première branche (26 ; 126 ; 226), une deuxième branche (28 ; 128 ; 228) et un élément de liaison (30 ; 130 ; 230) reliant les deux branches, sachant que les deux branches (26, 28 ; 126, 128 ; 226, 228) peuvent être déviées élastiquement l'une par rapport à l'autre dans un plan de cisaillement,
b) une pièce de fixation (22 ; 160 ; 270) disposée à l'extrémité libre de la première branche (26 ; 126 ; 226) pour la fixation amovible du positionneur de portière (10 ; 110 ; 210) sur une face intérieure (20) de la portière latérale (12),
c) une partie d'actionnement (56 ; 156 ; 256) disposée à l'extrémité libre de la deuxième branche (28 ; 128 ; 228) et par laquelle la deuxième branche (28 ; 128; 228) peut être déviée par rapport à la première branche (26 ; 126 ; 226),
et avec
d) un moyen d'immobilisation (46 ; 48 ; 146, 148 ; 246, 248) disposé sur la deuxième branche (28 ; 128 ; 228) entre l'élément de liaison (30 ; 130 ; 230) et la partie d'actionnement (56 ; 156 ; 256) pour l'enclenchement à effet de ressort du positionneur de portière sur un montant de portière (16) de la carrosserie de véhicule automobile.

2. Positionneur de portière selon la revendication 1, dans lequel la partie d'actionnement (56 ; 156 ; 256), dans une position de repos, fait au moins approximativement face à la pièce de fixation (22 ; 160 ; 270).

3. Positionneur de portière selon la revendication 1 ou 2, dans lequel la partie d'actionnement est une bague (56 ; 156 ; 256).

4. Positionneur de portière selon la revendication 3, dans lequel la bague (56 ; 156 ; 256) est disposée dans un plan de bague qui forme avec le plan de cisaillement un angle inférieur à 25°.

5. Positionneur de portière selon la revendication 4, dans lequel le plan de bague forme avec le plan de cisaillement un angle inférieur à 5°.

6. Positionneur de portière selon l'une des revendications précédentes, dans lequel les deux branches (26, 28 ; 126, 128 ; 226, 228) sont disposées, dans leur position de repos, dans un plan qui s'étend perpendiculairement au plan de cisaillement.

7. Positionneur de portière selon l'une des revendications précédentes, dans lequel, dans le support (32 ; 132 ; 232), seul l'élément de liaison (30 ; 130 ; 230) est élastiquement déformable.

8. Positionneur de portière selon l'une des revendications 1 à 6, dans lequel les deux branches (26, 28 ; 126, 128 ; 226, 228) et l'élément de liaison (30 ; 130 ; 230) sont réalisés d'un seul tenant en un matériau élastique.

9. Positionneur de portière selon l'une des revendications précédentes, dans lequel le moyen d'immobilisation comprend un évidement (46 ; 48 ; 146, 148; 246, 248) dans lequel peut s'engager une partie (18) du montant de portière (16).

10. Positionneur de portière selon la revendication 9, dans lequel, sur une face intérieure de l'évidement, au moins une saillie (174, 176) est formée de telle sorte que la partie (18) du montant de portière (16) ne peut entrer en contact avec la saillie au moins unique (174, 176) qu'en un point ou le long d'une ligne.

11. Positionneur de portière selon l'une des revendications précédentes, dans lequel un contre-élément fixe (40 ; 140 ; 240), pouvant être dévié conjointement avec la deuxième branche (28 ; 128 ; 228), est disposé sur la deuxième branche (28 ; 128 ; 228) entre le moyen d'immobilisation (46 ; 48 ; 146, 148 ; 246, 248) et la partie d'actionnement (56 ; 156 ; 256) et coopère, avec un élément de blocage (58 ; 158 ; 258) qui est disposé sur la première branche (26 ; 126 ; 226) et s'étend vers l'extérieur à partir de la première branche (26 ; 126 ; 226) dans le plan de cisaillement, de telle sorte que le montant de portière (18) est, dans une position fermée de la portière latérale (12), serré entre l'élément de blocage (58 ; 158 ; 258) et le contre-élément (40 ; 140 ; 240).
